Europäisches Patentamt

European Patent Office

Office européen des brevets

(19)

(11) Publication number: **0 085 719**

**A1**

(12) **EUROPEAN PATENT APPLICATION**
published in accordance with Art. 158(3) EPC

(21) Application number: 82901537.9

(22) Date of filing: 24.05.82

Data of the international application taken as a basis:

(86) International application number:
PCT/JP82/00189

(87) International publication number:
WO82/03970 (25.11.82 82/28)

(51) Int. Cl.³: **A 23 C 7/00**
**A 23 C 9/00, A 23 C 9/144**

(30) Priority: 23.05.81 JP 78355/81

(43) Date of publication of application:
**17.08.83 Bulletin 83/33**

(84) Designated Contracting States:
**AT CH DE FR GB LI NL SE**

(71) Applicant: SATO, Jiro
15-5, Nakamakitamaeta matsuyamacho
Akumi Gun Yamagata 999-68(JP)

(72) Inventor: SATO, Jiro
15-5, Nakamakitamaeta matsuyamacho
Akumi Gun Yamagata 999-68(JP)

(74) Representative: Patentanwälte Viering & Jentschura
Steinsdorfstrasse 6
D-8000 München 22(DE)

(54) PROCESS FOR IMPROVING TASTE OF MILK.

(57) A process for improving taste of milk such as peculiar smell and taste of commercially available milk, which comprises negatively charging raw milk or heat-sterilized milk in a suitable stage of milk-processing process before forwarding to market, directly or in a vessel-packaged state while insulating the milk from the earth as much as possible for a period of at least six hours using a static electricity generator. Thus, taste of milk can be improved without resort to any additive or electrodialysis utilizing an ion exchange membrane.

## DESCRIPTION

## METHOD FOR INPROVING THE TASTE OF MILK

Technical Field:

This invention relates to a totally novel method of improving the taste of processed cow's milk sold on the market, or so-called commercial milk, which has certain peculiar disagreeable sawors such as a grassy smell.

Background Art:

Although the gross output of milk in Japan amounts to 6,000,000 tons a year, the amount of milk consumed per capta is far below the figures for other countries. One reason therefor is the comparatively high price of home-produced milk and the lack of the economic environment that encourages the habitual drinking of milk in other countries. Another reason is the fact that there is an unexpectedly large number of people who dislike the flavor of milk. This is probably because the Japanese people historically have no great partiality to milk since for one thing, they only developed the habit of drinking milk about a hundred years ago.

- 2 -

0085719

Thus the consumption of milk does not expand greatly and, accordingly, the business conditions of dairy farmers and milk processors do not improved, causing the vicious cycle of low demand and high prices.

One of the most effective means for saving this situation is to expand the consumption of milk among the Japanese people. This may be realized if a milk is provided which is improved in taste and devoid of its disagreeable savor but is unchanged in components and has a rather better digestability.

Hitherto, commercial milk has been generally processed in the following procedure. The raw milk supplied from the dairy farmers is collected in a processing plant where the milk is subjected to quality tests and weighing in conformity with the ordinaces of the Ministry of Welfare so that the milk will cause no sanitary problems concerning temperature, smell, etc., and it is then cooled and stored. Immediately thereafter or after it has stood for a given period of time, the raw milk is heat-sterilized in a heat-exchange sterilizer. The sterilized milk is then subjected to a homogenizer to mechanically fractionize and homogenize

- 3 -

0085719

the fat globules in the milk, and is then automatically bottled or packed for shipment. The thus processed commercial milk is sometimes supplemented with vitamins or inorganic substances during the of processing to make a fortified milk, or the milk ingredients are increased to provide a concentrated milk. Also sugar or other substances to give an extra relish such as the taste of coffee may be added to produce a flavored milk drink. Thus, various means and techniques are being tried for improving the taste or nutritive qualities of milk in the hope of increasing its consumption.

Beside the above, attempts have also been made to pass an electric current through milk using a semi-permeable menbrane to control the amount of metal salts in the milk to improve the flavor as well as the nutritive value and digestability of milk, such as the methods proposed in Japanese Patent Publications 1590/66 and 1467/67.

The present invention is intended to provide a quite novel milk processing method which can be commercially practiced to ensure an improvement of the digestability and absorbability as well as the taste and smell of milk without resorting to the conventional means of physically adjusting the milk ingredients such as by adding other substances or adjusting the quartity of metal salts in the milk by electric dialysis or other means, but which maintains the innate milk ingredients unchanged.

The present invention is also envisaged to realize a novel milk processing method which can be readily employed as a positive means of improving the peculiar taste of milk by a simple process and with an economical advantage not only to large-scale milk processing plants but also for small local milk processing equipment.

It is also an important object of this invention to provide, safely and at a low cost, a commercial milk having an improved taste which suits everyone's fancy without resorting to the addition of extra substances which could be harmful to the human body as are added to conventional milk.

Disclosure of Invention:

The present invention provides a method of improving the taste of milk featuring the incorporation of a specific treatment step comprising charging the milk directly or through a milk container with a negative static charge for a given period of time under a condition in which it is as completely insulated as possible from the ground at a pertinent stage in a conventional milk treatment process before its shipment as commercial milk.

The step of charging the milk with negative static electricity for a given period of time according to this invention may be incorporated either before or after the step of packing the milk in containers such as bottles or cardboard packs.

In the former case, said step of this invention may be performed on raw milk which has gone through the quality tests and weighing and is at the cooling and storage stage, or it may be performed on processed milk which has undergone the heat sterilization treatment and is at a stage before proceeding to the automatic packing step. In this case, it is possible to efficiently treat a large volume of milk at one time, but it is necessary to build up and incorporate in the treatment process a full-sized milk storage tank capable of containing a large volume of milk while keeping it almost perfectly insulated from the ground for a given period of time.

On the other hand, when conducting said electric charging treatment on individual milk containers such as cardboard packs after the milk has been packed therein and sealed, although the treatment efficiency is somewhat lower than the above case, this has the advantage that said step can be employed and practiced in a relatively simple way even in a processing plant where the conventional treatment steps are already in operation.

Brief Description of Drawings:

The drawings illustrate the basic apparatus for practicing the method of this invention, where FIC. 1 is the arrangement, with parts shown in section, of a typical embodiment of the invention, and FIC. 2 is a similar arrangement of another embodiment of the invention.

Best Mode for Carrying Out the Invention:

The basic forms for the practice of the milk-taste improvement method according to this invention are illustrated in FIC. 1 and 2 of the accompanying drawings, so the characteristic features of the present invention will be described in detail hereinbelow with reference to the drawings.

A milk reservoir or a milk container bearing plate 1 is fixedly provided at a position as far from the ground E as circumstances permit, and in order to realize a good insulation, said milk reservoir or bearing plate 1 is supported by insulators with a high insulating capacity such as those used for high-voltage transmission, said insulators being fixed on a support bed 2. It is imperative that said milk reservoir or bearing plate 1 is supported by said insulators alone, it must not be connected at any part to other devices, and must not be supported in contact with part of a structure for the purposes of reinforcement, etc. If it is necessary to support the milk reservoir or bearing plate 1 on a wall, ceiling or other part of a structure for the purposes of reinforcement, insulators such as those above, or other high-capacity insulating material should be interposed between the supporting part of the structure and the milk reservoir or bearing plate 1.

The milk reservoir or milk container bearing plate 1, which is thus kept in an almost perfectly insulated state, is then charged with negative static electricity. Such charging may be accomplished by immersing a terminal 41 of a commercially available static electricity generator (for example, "Ahmah" available from Ahmah Co., Ltd., "IZUME" available from Kanto Health Co., Ltd., or "HEALTH-

- 8 -

0085719

TRON" available from Nichiju Bioschience Research Instutute) directly into the milk as in the embodiment shown in FIC. 1 to thereby charge the milk with a negative potential, or by connecting the terminal 41 to the milk reservoir or milk container bearing plate 1 (when such reservoir or bearing plate is made of stainless or other steel plate) to effect the charging of the negative static electricity through said reservoir or plate 1 as in the embodiment of FIC. 2 to thereby charge the milk with a negative potential. In the drawings, numeral 42 indicates a power connection cord for the static electricity generator, and 43 denotes an insulating plate such as a hard foamed synthetic resin plate.

The embodiment of FIC. 1 is suitable for the above former case of the charging step, that is, when the charging treatment is performed before the step of packing the milk in containers, and the embodiment of FIC. 2 is suitable for the latter case, that is, when the charging treatment is conducted after the milk has been packed in cardboard containers and sealed.

Industrial Applicability:

When the milk is kept charged with negative static electricity for a period of usually at least 6 hours, preferably around 10 hours, by the above means, a change is reliably produced in the taste of the milk. In fact, when milk which has been subjected to the charging treatment of this invention and non-treated conventional milk are sampled by ordinary people, it is certain that 10 out of 10 people will point out the difference in taste to the palate and would notice that the treated milk has a greatly reduced grassy smell, and other disagreeable odors peculiar to ordinary commercial milk. Further, after drinking conventional milk, ever yone will feel oppressed in their stomachs after drinking the milk, in other words, they will show various degrees of abnormal symptoms resulting from their inability to absorb lactose and will have a sense of discomfort for the time required for the digestion and absorption of the milk. But for milk treated according to the method of this invention, such undesirable phenomena are substantially eliminated.

The mechanism that brings about such an improvement of the taste and digestability is not yet definitely known. In the analytical examinations conducted by the Industrial Technology Research Center of Yamagata Pref., Japan, and the Sakata Public Health Center of the same prefecture, it was found that milk treated according to the method of this invention had no changes in the milk composition and the pH value which remained around 6.7. However, in a fat separation test (conducted by mixing ethyl ether in milk and stirring the mixture), the following facts were found. When the milk treated according to this invention was mixed with ethyl ether and the mixture was stirred and then left to stand, a cotton-like white precipitate was immediately produced and sedimented, while in the case of conventional milk, a particulate white precipitate was produced and it settled slowly. Further, when the mixture, after the lapse of 5 minutes, was again stirred and then left to stand the cotton-like precipitate in the milk of this invention was further increased in density and settled more quickly, while in the case of conventional milk, although a change of the particulate white precipitate into a cotton-like one was noted, its density was low and it also settled slowly. It is uncertain what caused these experimental results and how they are related to the improvements of taste and digestability (absorbability), but it is supposed that since milk is a colloidal solution of sugar and inorganic substances where fat is dispersed in an emulsified state and protein in a suspended state, if such a colloidal solution (milk) is charged with negative static electricity for a long time, a certain change is caused in the dispersal conditions of each of the components in the solution, particularly the interrelated dispersal conditions of fat with other components (intermolecular bonding conditions), and such a change causes the improvements of taste and digestability (absorbability).

Thus, according to this invention, although it still involves an unclarified area relating to the cause of the improvement, a milk is certainly provided which has a distinct difference in taste and is improved in digestability and absorbability compared with conventional milk, and owing to such an improved taste and digestability (absorbability), a commercial milk can be offered which is quite acceptable even to those people suffering from lactose deficiency which is said to be not uncommon among Japanese, and this will lead to an increase of milk consumption and a large economical effect of great agriculatural and industrial significance can be expected.

It is also an important effect of this invention that it can provide an additional reliable source of supply of nutrition even for those people who have hitherto a dislike of milk, thus assuring them a more healthy and enriched life.

- 13 -

0085719

WHAT IS CLAIMED IS:

1. A method of improving the taste of cow's milk characterized in that, at a pertinent stage in the milk treatment process before its shipment as commercial milk, the raw milk or heat-sterilized milk, either in the form of loose milk or when packed in containers, is charged with negative static electricity for a given period of time under the best possible insulated conditions from the ground to thereby eliminate the disagreeable odors such as the grassy smell peculiar to cow's milk and to thus improve the taste of milk.

2. The method of Claim 1, wherein the charging with negative static electricity is conducted on raw milk in a milk reservoir where raw milk is cooled and stored.

3. The method of Claim 1, wherein the charging with negative static electricity is conducted on heat-sterilized milk contained in sealed cardboard packs.

0085719

第 1 図

第 2 図

# INTERNATIONAL SEARCH REPORT

## 0085719

International Application No. PCT/JP82/00189

### I. CLASSIFICATION OF SUBJECT MATTER (if several classification symbols apply, indicate all)[3]

According to International Patent Classification (IPC) or to both National Classification and IPC

Int. Cl.$^3$  A23C 7/00, 9/00, 9/144

### II. FIELDS SEARCHED

| Minimum Documentation Searched[4] | |
|---|---|
| Classification System | Classification Symbols |
| I P C | A23C7/00, 9/00, 9/144, C02F 1/48, A23L 1/00, 3/26 – 3/32 |

| Documentation Searched other than Minimum Documentation to the Extent that such Documents are Included in the Fields Searched[5] |
|---|
| Kokai Jitsuyo Shinan Koho    1971 – 1981 |

### III. DOCUMENTS CONSIDERED TO BE RELEVANT[14]

| Category* | Citation of Document,[16] with indication, where appropriate, of the relevant passages[17] | Relevant to Claim No.[18] |
|---|---|---|
| A | JP,A, 56-119257 (Kashima Tatsunobu), 18. September. 1981 (18.09.81) | 1 – 3 |
| A | JP,A, 54-84044 (Kumayasu Fumio), 4. July. 1979 (04.07.79) | 1 – 3 |

* Special categories of cited documents:[15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

### IV. CERTIFICATION

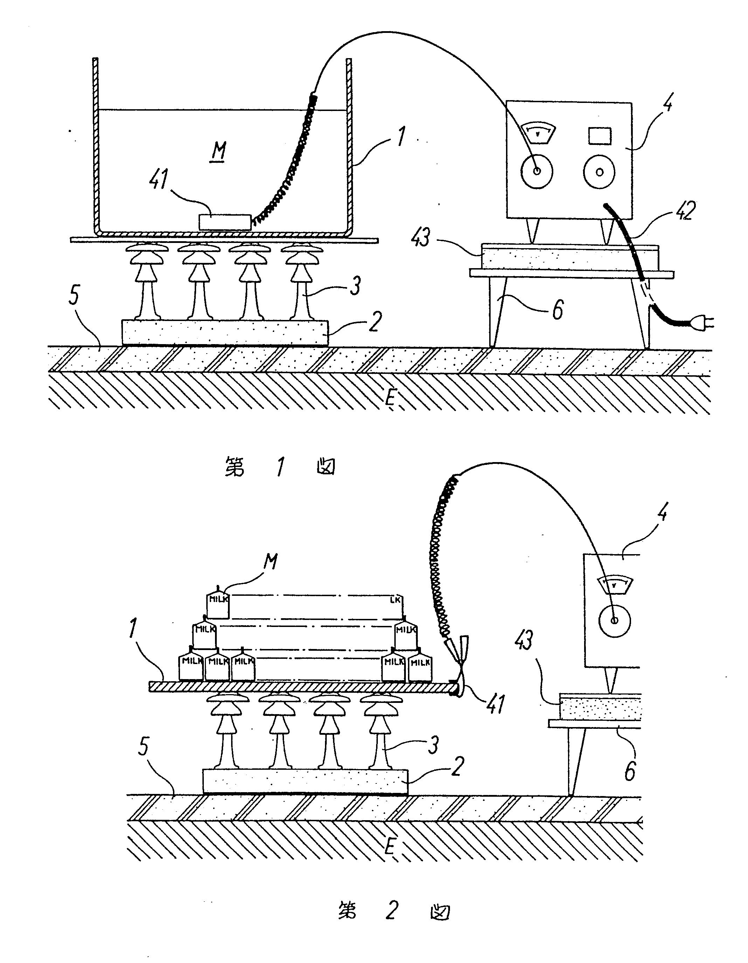

| Date of the Actual Completion of the International Search[3] | Date of Mailing of this International Search Report[3] |
|---|---|
| July 13, 1982  (13.07.82) | August 2, 1982  (02.08.82) |
| International Searching Authority[1] Japanese Patent Office | Signature of Authorized Officer[20] |

Form PCT/ISA/210 (second sheet) (October 1981)